# FASCICULE DE BREVET EUROPEEN

(11) **EP 2 019 998 B1**
(45) Date de publication et mention de la délivrance du brevet: **31.08.2011**
(21) Numéro de dépôt: 07731446.6
(22) Date de dépôt: 11.05.2007
(51) Int. Cl.: G06K 19/077

(54) **ETIQUETTE INTEGRANT UNE ANTENNE ANTI-VOL RF ET UN TRANSPONDEUR RFID UHF**
LABEL MIT EINER HF-ANTIDIEBSTAHLANTENNE UND UHF-RFID-TRANSPONDER
LABEL INCORPORATING AN RF ANTI-THEFT ANTENNA AND A UHF RFID TRANSPONDER

(30) Priorité: 12.05.2006 FR 0604272
(43) Date de publication de la demande: 04.02.2009
(73) Titulaire: All-tag Security S.a., 7170 Manage (BE)
(72) Inventeur: HEURTIER, Eric, 78720 Dampierre (FR)
(74) Mandataire: Troesch Scheidegger Werner AG
(86) Numéro de dépôt international: PCT/FR2007/000805
(87) Numéro de publication internationale: WO 2007/135269

(56) Documents cités:
- WO-A-2004/104958
- WO-A2-02/29929
- US-A1- 2004 089 707
- US-A1- 2004 263 319
- US-B1- 6 837 438

## Description

### Domaine de l'invention

L'invention a pour objet l'intégration d'un complexe RFID assurant la traçabilité des objets ou des biens sur une étiquette possédant par ailleurs une antenne antivol RF standard fonctionnant entre 5 et 10 Mhz.

### Etat de la technique

Parmi les principales préoccupations des gestionnaires d'entrepôts et de magasins concernant les flux de marchandises, on trouve, d'une part la traçabilité (c'est-à-dire l'identification, la localisation et le suivi du déplacement) d'un objet, et d'autre part, sa protection contre le vol, notamment dans les points de vente.

Une première préoccupation est la protection des articles contre le vol dans les points de vente. Aujourd'hui de plus en plus d'étiquettes antivol sont intégrées à l'article lors de sa fabrication ou lors de son conditionnement selon le principe du marquage à la source (en anglais « source tagging »). Le fait d'apposer l'élément antivol à la source (c'est-à-dire lors de la fabrication ou conditionnement de l'article) évite la pose de celui-ci dans les autres étapes de la vie commerciale du produit.

Plusieurs types de systèmes antivol existent sur le marché. Les deux systèmes les plus vendus dans le monde sont le système antivol à radiofréquence (RF) avec une antenne spirale (« coil ») ou à boucle fermée fonctionnant entre 5 et 8,2 Mhz et le système acousto-magnétique, avec un élément fonctionnant à 58 Khz.

Les systèmes EAS (electronic article surveillance) renvoient un signal résonnant par l'intermédiaire d'une antenne lorsqu'ils se déplacent à travers un champ magnétique alternatif dont la fréquence coïncide avec la fréquence de résonance de l'antenne ; ce champ magnétique alternatif est fourni par des bornes à la sortie du magasin. Selon l'état de la technique, le signal renvoyé par l'antenne EAS ne comporte pas d'identifiant.

Une deuxième préoccupation des gestionnaires d'entrepôts et magasins est l'identification et la localisation à distance d'un objet dans un entrepôt ou magasin. L'identification d'un objet est possible grâce aux systèmes d'identification par fréquence radio (RFID). Ces systèmes comportent un lecteur et un transpondeur. Le lecteur comporte un émetteur d'ondes radio et de champs magnétiques ; il reçoit les réponses des transpondeurs (transmetteur-récepteur) se trouvant dans son champ de lecture. Le transpondeur comprend un circuit intégré, avec ou sans mémoire, et une antenne.

Le marché de la RFID est généralement décomposé selon les plages dé fréquences utilisées :
- La RFID basse fréquence (100 - 250 KHz)
- La RFID Haute fréquence (HF) (12MHz - 100 MHz)
- La RFID Ultra haute fréquence (UHF) (400 MHz - 2.45 GHz)

La RFID UHF est de plus en plus utilisée pour assurer un bon suivi des objets ou des biens de consommation. Pour ce faire, un transpondeur comprenant une antenne UHF et un circuit intégré est appliqué sur le bien ou sur l'objet à tracer. L'antenne est conçue de manière à ce que son inductance ait une valeur déterminée permettant de former un circuit résonant avec la capacité du circuit intégré. L'ensemble communique avec des récepteurs ou lecteurs dont la puissance d'émission et la plage de fréquence de fonctionnement doivent s'adapter aux exigences des législations et règlements en vigueur dans les différents pays.

Selon l'état de la technique, le transpondeur est mis en oeuvre sous forme d'étiquette papier, carton, étiquette adhésive, étiquette de prix, de contexture, griffe tissée ou autre support. Ces étiquettes sont ensuite ajoutées au produit. Cela est décrit par exemple dans le brevet US 6,147,662 (Moore North America, Inc.) et dans la demande de brevet WO 2005/119617 (Filtrona United Kingdom Ltd.). Or, s'il est souvent intéressant de pouvoir suivre un produit soit depuis sa fabrication jusqu'à sa vente soit depuis les centres de distribution jusqu'au point de vente, en revanche il est coûteux et fastidieux de rajouter une nouvelle étiquette à un article après sa fabrication.

Actuellement seul l'élément antivol peut être posé à la source, l'élément UHF étant ajouté à un stade ultérieur de la chaîne de commercialisation, et il n'existe pas de produit associant l'élément RF antivol HF et l'élément RFID UHF sur un même support indissociable ou sur une même étiquette.

Plusieurs demandes de brevet récentes (US 2004/0089707, US 2004/0263319, WO 2004/104958) proposent des dispositifs susceptibles d'intégrer les fonctions d'identification par radiofréquence et d'antivol, et qui se caractérisent par une certaine complexité de fabrication et / ou d'utilisation ; le document WO 2004/104958 (Checkpoint Systems) concerne un dispositif de type « hard tag » notamment utilisé pour protéger des vêtements. En effet, le coût de fabrication d'un tel dispositif est une préoccupation majeure, si ce dispositif est destiné à être utilisé pour des marchandises de valeur relativement faible.

L'objet de la présente invention est de présenter une étiquette qui améliore un mois un des inconvénients indiqués ci-dessus. Résumé de l'invention

La présente invention propose une étiquette Selon la revendication 1.

Aussi proposée est un procédé de fabrication d'une étiquette (appelée « étiquette RFID/antivol ») Selon la revendication 4.

Aussi proposée est un procédé d'utilisation d'une telle étiquette RFID / antivol, selon la revendication 7.

### Description des figures

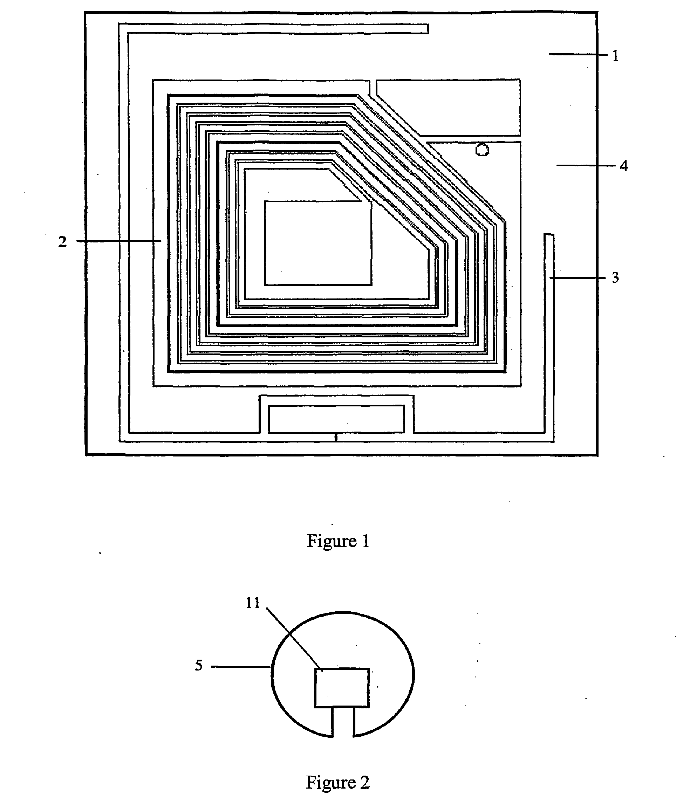

La figure 1 montre une étiquette 1 selon un mode de réalisation de l'invention : l'antenne EAS 2 et l'antenne dipôle UHF 3 sont gravées sur la même face 6 (face dite face avant) du substrat 4.
La figure 2 montre la mini-antenne sous forme d'une boucle (self) 5 avec son circuit intégré 11.

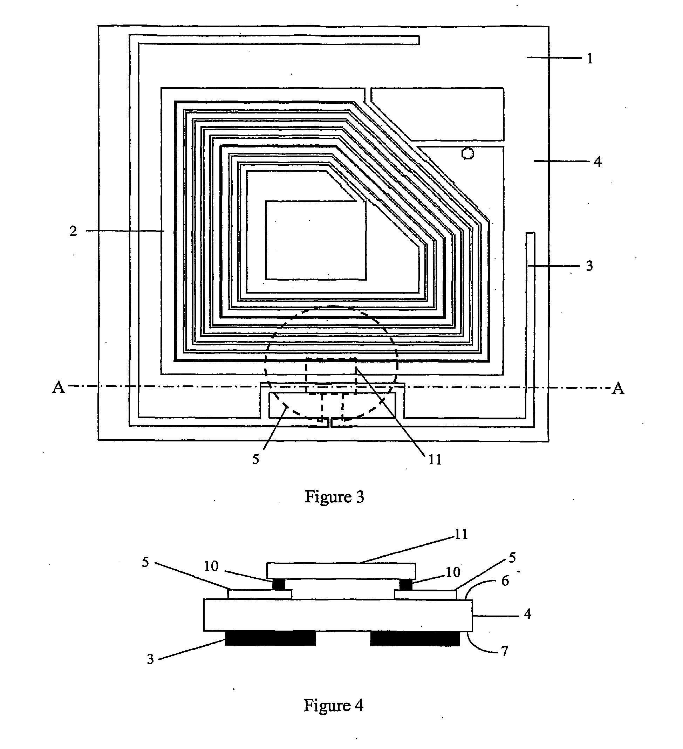

La figure 3 montre une étiquette 1 selon un autre mode de réalisation de l'invention : sur l'étiquette de la figure 1, on ajoute une boucle 5 et un circuit intégré 11 sur la face arrière 7 du substrat 4.
La figure 4 montre une coupe transversale selon la ligne A-A du dispositif de la figure 3 : les contacts 10 du circuit intégré 11 sont en contact électrique avec les brins de la boucle 5 ; la boucle 5 et le circuit intégré 11 sont déposés sur la face arrière 7 du substrat 4, alors que l'antenne dipôle UHF se trouve sur la face avant 6 du substrat 4.

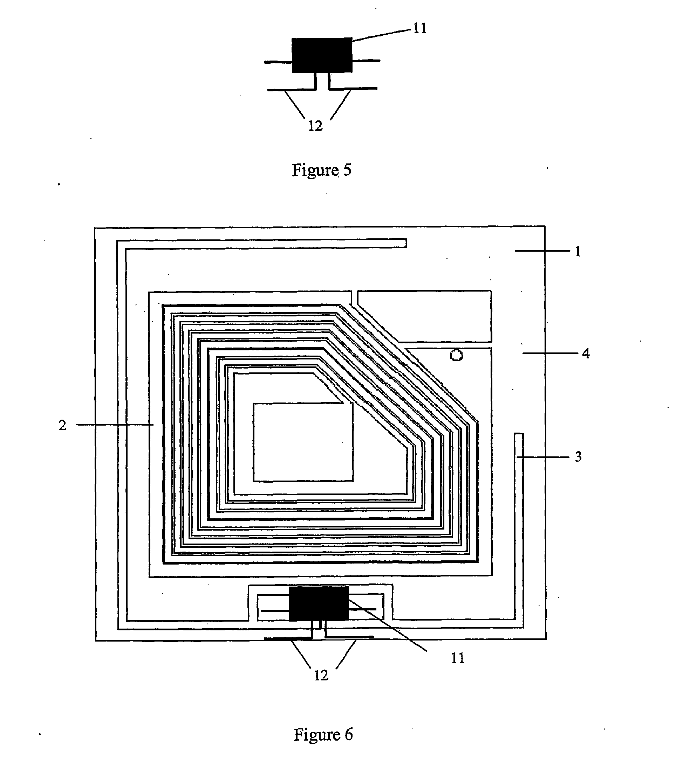

La figure 5 montre la mini-antenne de type « strap » 12 avec son circuit intégré 11.
La figure 6 montre l'étiquette 1 selon encore un autre mode de réalisation de l'invention : sur l'étiquette de la figure 1, on ajoute un « strap » 12 et un circuit intégré 11 sur la face avant 6 du substrat 4.
La figure 7 montre un diagramme de flux concernant le procédé d'utilisation de l'étiquette selon l'invention le long de la chaîne logistique.

### Description de l'invention

La présente invention associe sur une même étiquette une antenne UHF et un transpondeur RFID à une antenne EAS fonctionnant en mode RF, évitant ainsi l'ajout d'une seconde étiquette sur le produit à protéger ou à tracer.

Un premier problème résolu par l'invention concerne l'intégration sur une même étiquette de deux antennes : une première antenne EAS antivol RF fonctionnant de préférence à des fréquences de résonance comprises entre 2 et 10 MHz, et plus préférentiellement entre 5 et 8 MHz, et une seconde antenne UHF fonctionnant de préférence à des fréquences de résonance comprises entre 0,8 et 2,5 GHz avec comme fonction l'identification et le suivi d'objets.

Les antennes RF EAS sont le plus souvent fabriquées en aluminium, sur la base d'une technologie soustractive de métal d'aluminium (typiquement par gravure) sur les deux faces d'un support plastique, par exemple en polypropylène (PP) ou polyéthylène téréphthalate (PET). Ces antennes ont typiquement une forme de spirale (« coil ») ou une forme en boucle fermée. Lorsque l'antenne RF EAS est réalisée sur les deux faces du substrat, un pont doit être réalisé afin d'assurer la continuité électrique entre les dépôts sur les deux faces, typiquement soit par sertissage mécanique (« crimping » en anglais) soit par un trou métallisé (« vias »). L'antenne RF de l'EAS ne peut pas être utilisée pour résonner avec un circuit intégré fonctionnant dans les plages de fréquences UHF.

En revanche, l'inventeur a constaté que le procédé de fabrication de l'antenne EAS RF habituellement utilisé par l'homme du métier, permet la fabrication, selon les mêmes techniques que celles employées pour l'antenne EAS, d'une seconde antenne fonctionnant en mode UHF à proximité de celle-ci. Cette antenne UHF est typiquement une antenne de type dipôle. Il pourra s'agir par exemple soit d'une antenne dipolaire simple, soit d'une antenne dipolaire avec boucle d'ajustement de l'impédance.

Pour ne pas perturber le bon fonctionnement des deux antennes, même si celles-ci fonctionnent dans des plages de fréquences très éloignées, une distance minimale de séparation entre les deux antennes doit être respectée. Pour simplifier le procédé de fabrication, l'antenne UHF peut être fabriquée en même temps que l'antenne RF EAS.

Dans un mode de réalisation particulier, l'antenne EAS et / ou l'antenne UHF sont réalisées par une technique mécanique soustractive de métal, par exemple par une technique appelée en anglais « die cutting ».

Un autre problème résolu par l'invention concerne l'assemblage du circuit intégré UHF avec l'antenne UHF fabriquée en même temps que l'antenne EAS RF. En effet, afin d'obtenir une performance optimale de l'antenne RF EAS et de limiter son coût, celle-ci est généralement déposée sur un substrat de polypropylène ou PET. Sur ce type de support, l'interconnexion par la technologie flip chip d'un circuit intégré à l'antenne aluminium UHF est difficile car d'une part le polypropylène ne résiste pas aux températures permettant une bonne soudure du circuit intégré, et d'autre part, l'ensemble du complexe étant très souple, le circuit intégré se décolle facilement lorsqu'il est fixé de manière classique. Ce sont probablement les raisons pour lesquelles il n'a pas encore été envisagé de déposer l'antenne EAS RF et l'antenne UHF sur le même substrat.

Pour résoudre ce problème et permettre une connexion entre le circuit intégré et l'antenne UHF, un aspect de l'invention consiste à utiliser une antenne boucle en aluminium, sur laquelle sera connecté un circuit intégré qui peut fonctionner par induction capacitive avec l'antenne UHF. La taille de cette antenne boucle dépend de la valeur de la capacité du circuit intégré. Selon un autre mode de réalisation de l'invention, on pourra également connecter le circuit intégré à une mini-antenne d'une taille de quelques millimètres, par exemple une mini-antenne dipolaire de type « strap ». Le strap pourra être soit serti à l'antenne UHF soit collé avec une colle conductrice afin d'assurer une liaison électrique.

Selon l'invention, le circuit intégré présentant une capacité sera couplé à une antenne de type self, par exemple une antenne boucle, qui fonctionne comme un résonateur magnétique. La taille de cette antenne self doit être telle qu'elle puisse résonner en LC sur la base de la formule F=1/(2π√LC), F étant ici la capacité du circuit intégré. Cette antenne self se présente avantageusement sous la forme d'une boucle ou d'un mini brin. Elle fonctionne par induction avec l'antenne UHF dont la dimension des brins est déterminée pour fonctionner aux fréquences désirées.

L'antenne self peut être réalisée en aluminium, cuivre, encre conductrice ou tout autre matériau conducteur approprié, de préférence sur un substrat en matière plastique, tel que le PET ou tout autre matériau plastique présentant une résistance suffisante à la chaleur. L'inductance de l'antenne est déterminée en fonction de la valeur capacitive du circuit intégré 11. Normalement, l'antenne self est plus petite, i.e. plus courte, que l'antenne UHF ; une mini-antenne peut convenir. Le circuit intégré 11 est connecté par flip chip ou par tout autre type de connexion aux brins de l'antenne self 5. Il peut être collé sur le substrat sur lequel est déposé la boucle ou le mini brin. Pour cette antenne mini brin (plus communément appelée « strap »), une longueur de brin de l'ordre de 2 à 3 mm par brin peut convenir, mais la longueur précise n'est pas critique.

L'antenne self 5, avec le circuit intégré 11, sur son substrat, de préférence en matière plastique, est ensuite fixée, de préférence par un adhésif, sur la face avant 6 ou sur la face arrière 7 du substrat 4, à proximité de l'antenne UHF. Par exemple, le substrat comportant l'antenne self 5 et le circuit intégré 11 peut être collé directement en contact de l'antenne UHF, ou sur un support de protection qui couvre l'antenne UHF et l'antenne RF EAS.

Dans un mode de réalisation avantageux, le positionnement de l'antenne self est réalisé par fixation sur un adhésif préalablement déposé sur la face arrière du support plastique ou papier des antennes HF et UHF.

L'antenne self 5 est positionnée en regard des deux brins de l'antenne UHF et fonctionne comme un élément rayonnant.

Lorsque le circuit intégré 11 est posé avec son antenne self 5 en regard des deux brins de l'antenne UHF 3 servant de grandes capacités celle-ci devient complètement isolée du courant statique de l'élément rayonnant qui se trouve sur l'autre face du circuit.

L'isolation permet de toucher l'élément rayonnant sans avoir de contact physique avec le circuit intégré ce qui permet d'éviter toute dégradation de celle ci par l'effet des courants statiques.

L'antenne self fonctionne par couplage capacitif avec l'antenne UHF de type dipôle. Cela permet d'alimenter par couplage le circuit intégré et autorise une lecture à distance de l'identifiant contenu dans la mémoire du circuit intégré 11.

Dans le cas d'une mini-antenne dipolaire (de type « strap »), la résonance s'effectue simplement par effet capacitif si le strap est posé sur la face arrière 7 de l'étiquette 1, ou par conduction électrique si le strap est posé sur la face avant 6.

Dans un mode de réalisation avantageux de l'invention, le module RF en mode UHF peut fonctionner à une fréquence de 850 à 950 MHz et à une fréquence de 2,3 à 2,5 GHz avec des bases stations fonctionnant à des puissances comprises entre 100 mW et 16 W pour l'identification d'objets à la volée sans contact, en fonction des réglementations nationales en vigueur, alors que la fonction antivol peut fonctionner en mode radiofréquence entre 2 et 10 MHz. L'antenne self permettra au dispositif RFID de fonctionner en champ proche sur des objets comportant soit du liquide (de l'eau par exemple) soit du métal.

L'invention a également pour objet un procédé de fabrication du transpondeur décrit ci-dessus. Le procédé comporte les étapes de :
(a) Fabrication d'une antenne de type self ou dépôt d'une antenne de type dipolaire sur un support ;
(b) Positionnement d'un circuit intégré connecté sur ladite antenne self ou dipolaire, réalisant ainsi un premier assemblage ;
(c) Fabrication sur la base d'une technologie soustractive de métal d'aluminium d'un produit intermédiaire constitué par une antenne RF EAS sur les deux faces d'un substrat, la continuité éléctrique ayant réalisé par un pont et une antenne UHF déposées sur une des faces du substrat;
(d) Fabrication d'un deuxième assemblage par positionnement et fixation du premier assemblage réalisé à l'étape (b) sur la face avant ou sur la face arrière dudit produit intermédiaire en regard de l'antenne UHF réalisée à l'étape (c),
et dans lequel les étapes (a) et (b) sont réalisées de manière séquentielle, et dans lequel l'étape (c) peut être réalisée avant, en même temps ou après les étapes (a) et (b).

Lors du positionnement et fixation du premier assemblage réalisé à l'étape (b), la fixation peut être effectuée par collage à l'aide d'un adhésif standard. Elle doit être fixée en regard de l'antenne UHF 3 réalisée à l'étape (c), sur la face avant 6 ou sur la face arrière 7 du deuxième substrat 4, de manière à ce que les composants du premier assemblage puissent fonctionner en couplage capacitif avec l'antenne UHF 3.

Les étapes (a) et (b) sont réalisées de manière séquentielle. L'étape (c) est chronologiquement indépendante des étapes (a) et (b) et peut indifféremment être réalisée, par exemple, avant, en même temps ou après les étapes (a) et (b).

A l'étape (c), l'antenne RF EAS est réalisée sur les deux faces du substrat, auquel cas un pont entre les deux faces de métal (typiquement ce métal est de l'aluminium) doit être réalisé, typiquement soit par sertissage, soit par un vias. -

Le circuit intégré peut être connecté à l'antenne self par flip chip.

Les antennes RF EAS-HF et UHF peuvent être fabriquées par exemple par gravure (etching) de l'aluminium, sur des rouleaux de matériaux complexes aluminium - plastiques ou aluminium - papier, le plastique pouvant être par exemple le polypropylène ou le PET.

Ensuite l'antenne self 5 ou le dipôle 12 et le circuit intégré 11 peuvent être posés sur la face arrière 7 ou sur la face avant 6 du substrat 4 selon un procédé de lamination avec de l'adhésif, ou avec tout autre moyen et procédé adapté. Avantageusement, le substrat 4 est en matière plastique, tel que le PET.

L'invention concerne également l'utilisation du transpondeur décrit ci-dessus pour assurer la protection antivol et/ou la traçabilité des objets protégés, et préférentiellement les deux fonctions à la fois.

Ce procédé d'utilisation de l'étiquette (appelée « étiquette RFID/antivol ») selon l'une quelconque des revendications 2 ou 3, ou de l'étiquette obtenue par le procédé selon des revendications 4 ou 5 comporte les étapes suivantes :
a) l'étiquette RFID/antivol est adjointe au produit à protéger et/ou à tracer à l'issue de la fabrication dudit produit ;
b) le circuit intégré de l'étiquette est chargé avec des données D, et l'antenne EAS RF est activée ;
c) les données D sont lues au moins une fois depuis la sortie de l'usine de fabrication dudit produit jusqu'à la désactivation de l'antenne EAS lors du passage du produit en caisse d'un point de vente ;
d) l'antenne antivol EAS est désactivée lors du passage dudit produit en caisse dudit point de vente ; sachant que les étapes a) et b) peuvent être exécutées dans n'importe quel ordre, alors que les étapes c) et d) sont exécutées dans l'ordre indiqué, et après les étapes a) et b).

L'antivol EAS fonctionne de manière classique.

En ce qui concerne la partie UHF, l'antenne d'un lecteur émet des ondes UHF qui vont exciter le circuit intégré. La boucle magnétique va fonctionner par effet capacitif avec l'antenne dipôle UHF, qui est de préférence située en périphérie de l'antenne antivol. Le circuit intégré envoie par le biais de l'antenne UHF des données à l'antenne réceptrice du lecteur. Ces données peuvent être de nature à identifier l'objet sur lequel l'étiquette est placée.

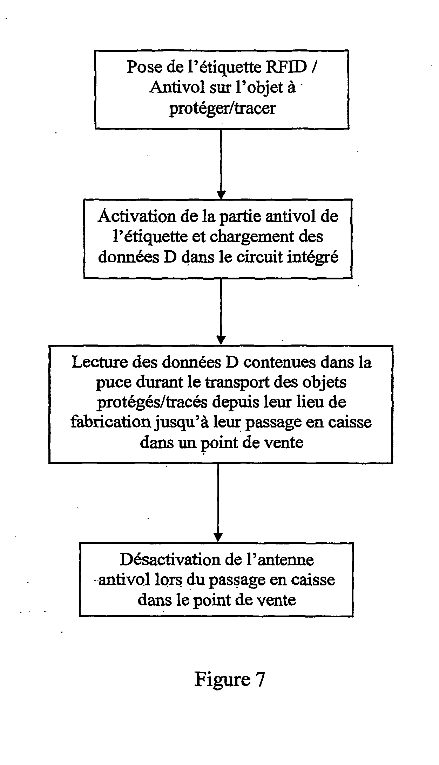

Le procédé d'utilisation du dispositif décrit plus haut est par exemple décrit sur la figure 7 :
(a) l'étiquette RFID/antivol est adjointe au produit à protéger et/ou à tracer à l'issue de la fabrication dudit produit ;
(b) le circuit intégré de l'étiquette est initialisée avec des données D, et l'antenne EAS RF est activée ;
(c) les données D sont lues au moins une fois depuis la sortie de l'usine de fabrication dudit produit jusqu'à la désactivation de l'antenne EAS lors du passage du produit en caisse d'un point de vente ;
(d)l'antenne antivol EAS est désactivée lors du passage dudit produit en caisse dudit point de vente ;
sachant que les étapes (a) et (b) peuvent être exécutées dans n'importe quel ordre, alors que les étapes (c) et (d) sont exécutées dans l'ordre indiqué, et après les étapes (a) et (b). Les données D sont des données relatives au produit à protéger et / ou à tracer.

Dans le magasin, les principales fonctions de l'étiquette selon l'invention sont une fonction antivol grâce à l'antenne EAS RF-HF, une fonction d'inventaire et de gestion des assortiments grâce au transpondeur RFID.

Ce procédé d'utilisation présente de nombreux avantages. L'utilisation de étiquette RFID/antivol facilite les opérations de marquage à la source (« source tagging ») des objets et des biens de consommation en intégrant la fonction de traçabilité au même endroit et en même temps que le système antivol. Cette intégration facilite le déploiement des solutions RFID et limitera les coûts de l'intégration des systèmes RFID au niveau de l'article.

### Exemple

On a réalisé sur un premier substrat en polypropylène (PP), se présentant sous la forme d'une feuille en rouleau, par gravure (etching) d'aluminium, une antenne EAS conçue pour résonner à une fréquence d'environ 8,2 MHz, et simultanément une antenne UHF de type dipôle, conçue pour résonner à une fréquence de 915 MHz, 950 MHz ou 869 MHz (ce qui correspond à trois variantes différentes, la fréquence étant choisie en fonction des réglementations en vigueur dans les différents pays). L'antenne EAS a été réalisée sur les deux faces de la feuille, et la continuité électrique a été réalisée par sertissage mécanique.

On a ensuite déposé sur un deuxième substrat en PET ou papier une mini-antenne boucle par dépôt d'une encre conductrice. On a ensuite connecté un circuit intégré sur cette antenne. Ce deuxième substrat avec l'antenne boucle et le circuit intégré a ensuite été collé à l'aide d'un adhésif double-face sur la face arrière du premier substrat en PP.

## Revendications

1. Etiquette apte à assurer les fonctions d'une étiquette anti-vol, EAS, et d'un transpondeur de type RFID UHF, **caractérisée en ce qu'**elle comprend :
(a) une feuille en matière plastique comme substrat (4),
(b) une antenne boucle EAS (2) réalisée en aluminium sur les deux faces (6, 7) du substrat (4) la continuité électrique étant réalisée par un pont et l'antenne boucle EAS (2) étant apte à fonctionner en mode radiofréquence,
(c) un transpondeur comportant une antenne UHF de type dipôle (3) réalisée sur une des faces (6, 7) dudit substrat (4), et
(d) l'antenne EAS (2) et l'antenne UHF de type dipôle (3) étant fabriquées à proximité l'une de l'autre.

2. Etiquette selon la revendication 1, **caractérisée en ce qu'**elle comprend en plus
(i) une antenne self (5) ou une antenne dipolaire de type « straps » (12), connectée à
(ii) un circuit intégré (11),
posés sur la face avant (6) ou arrière (7) dudit substrat (4).

3. Etiquette selon la revendication 2, **caractérisée en ce que** ladite antenne self (5) ou ladite antenne dipolaire (12) a été réalisée sur un support, de préférence une feuille en matière plastique, et **en ce que** ledit support est collé sur la face avant (6) ou la face arrière (7) dudit substrat (4).

4. Procédé de fabrication de l'étiquette de l'une quelconque des revendications 2 ou 3, comportant les étapes de:
(a) Fabrication de l'antenne self ou dépôt de l' antenne dipolaire sur le support ;
(b) Positionnement d'un circuit intégré connecté sur ladite antenne self ou ladite antenne dipolaire, réalisant ainsi un premier assemblage ;
(c) Fabrication sur la base d'une technologie soustractive de métal d'aluminium d'un produit intermédiaire constitué par une antenne RF EAS et une antenne UHF sur le substrat (4);
(d) Fabrication d'un deuxième assemblage par positionnement et fixation du premier assemblage réalisé à l'étape (b) sur la face avant ou sur la face arrière dudit produit intermédiaire en regard de l'antenne UHF réalisée à l'étape (c),
et dans lequel les étapes (a) et (b) sont réalisées de manière séquentielle, et dans lequel l'étape (c) peut être réalisée avant, en même temps ou après les étapes (a) et (b).

5. Procédé selon la revendication 4, dans lequel à l'étape (d), la fixation du premier assemblage sur la face avant ou arrière dudit produit intermédiaire est effectuée par collage.

6. Procédé selon la revendication 4 ou 5, dans lequel à l'étape (c), l'antenne EAS et / ou l'antenne UHF sont fabriquées par une technique mécanique soustractive de métal.

7. Procédé d'utilisation de l'étiquette, appelée étiquette « RFID/antivol », selon l'une quelconque des revendications 2 ou 3, ou de l'étiquette obtenue par le procédé selon les revendications 4 ou 5, ledit procédé d'utilisation comportant les étapes suivantes :
(a) l'étiquette RFID/antivol est adjointe au produit à protéger et/ou à tracer à l'issue de la fabrication dudit produit ;
(b) le circuit intégré de l'étiquette est initialisé avec des données D, et l'antenne EAS RF est activée ;
(c) les données D sont lues au moins une fois depuis la sortie de l'usine de fabrication dudit produit jusqu'à la désactivation de l'antenne EAS lors du passage du produit en caisse d'un point de vente ;
(d) l'antenne antivol EAS est désactivée lors du passage dudit produit en caisse dudit point de vente ;
sachant que les étapes (a) et (b) peuvent être exécutées dans n'importe quel ordre, alors que les étapes (c) et (d) sont exécutées dans l'ordre indiqué, et après les étapes (a) et (b).

8. Procédé selon la revendication 7, **caractérisé en ce que** les données D sont des données relatives au produit à protéger et / ou à tracer.

## Claims

1. A label adapted to perform the functions of an anti-theft, EAS, label and a UHF RFID transponder, **characterised in that** it comprises:
(a) a plastic sheet as substrate (4),
(b) an EAS loop antenna (2) realised in aluminium on the two sides (6, 7) of the substrate (4), the electrical connection being achieved by a bridge, and the EAS loop antenna (2) being adapted to operate in radio-frequency mode,
(c) a transponder with a UHF dipole antenna (3) realised on one of the sides (6, 7) of said substrate (4), and
(d) the EAS loop antenna (2) and the UHF dipole antenna (3) being manufactured in close proximity to each other.

2. The label of claim 1, **characterised in that** it further comprises
(i) a self-induction coil antenna (5) or a strap dipole antenna (12), connected to
(ii) an integrated circuit (11), placed on the front (6) or back (7) side of said substrate (4).

3. The label of claim 2, **characterised in that** said self-induction coil antenna (5) or said dipole antenna (12) was realised on a support, preferably a plastic sheet, and wherein said support is glued onto the front (6) or the back (7) side of said substrate (4).

4. A method of manufacturing the label of claim 2 or 3, comprising the steps of:
(a) manufacturing the self-induction coil antenna or depositing the dipole antenna on the support;
(b) positioning an integrated circuit connected to said self-induction coil antenna or said dipole antenna, thus producing a first assembly;
(c) manufacturing based on a subtractive aluminium metal technology an intermediate product comprising an RF EAS antenna and a UHF antenna on the substrate (4);
(d) manufacturing a second assembly by positioning and affixing the first assembly made in step (b) on the front or the back side of said intermediate product with respect to the UHF antenna made in step (c),
and wherein steps (a) and (b) are performed sequentially, and wherein step (c) may be performed before, concurrently or after steps (a) and (b).

5. The method of claim 5, wherein in step (d), affixing the first assembly on the front or back side of said intermediate product is performed by gluing.

6. The method of claim 5 or 6, wherein in step (c), the EAS antenna and/or the UHF antenna are manufactured by a mechanical subtractive metal technique.

7. A method of using the label, called "RFID/anti-theft" label, according to claim 2 or 3, or the label obtained by the method according to claim 4 or 5, said method of using comprising the following steps:
(a) affixing the RFID/anti-theft label to the product to be protected and/or to be tracked upon completion of manufacturing said product;
(b) initialising the integrated circuit of the label with data D, and activating the EAS RF antenna;
(c) reading the data D at least once between leaving the manufacturing plant of said product and deactivating the EAS antenna upon checking out the product at a point of sale;
(d) deactivating the EAS anti-theft antenna upon checking out of the product at the point of sale;
knowing that the steps (a) and (b) can be performed in any order, whereas steps (c) and (d) are performed in the indicated order, and after steps (a) and (b).

8. The method of claim 7, **characterised in that** the data D are data relating to the product to be protected and/or to be tracked.

## Patentansprüche

1. Ein Etikett geeignet zur Ausführung der Funktionen eines Antidiebstahl-, EAS, Etiketts und eines UHF RFID Transponders, **dadurch gekennzeichnet, dass** es umfasst:
(a) eine Plastikfolie als Substrat (4),
(b) eine EAS Schleifenantenne (2) realisiert aus Aluminium auf den beiden Seiten (6, 7) des Substrats (4), wobei die elektrische Verbindung als Brücke ausgeführt ist, und die EAS Schleifenantenne (2) zum Betrieb im Radiofrequenz-Modus geeignet ist,
(c) ein Transponder mit einer UHF Dipol-Antenne (3) realisiert auf einer der beiden Seiten (6, 7) des besagten Substrats (4), und
(d) die EAS Schleifenantenne (2) und die UHF Dipolantenne (3) nahe beieinander ausgeführt sind.

2. Das Etikett nach Anspruch 1, **dadurch gekennzeichnet, dass** es weiter umfasst
(i) eine Selbstinduktionsspulenantenne (5) oder eine "strap" Dipol-Antenne (12), verbunden mit
(ii) einer integrierten Schaltung (11), angeordnet auf der vorderen (6) oder der hinteren (7) Seite des besagten Substrats (4).

3. Das Etikett nach Anspruch 2, **dadurch gekennzeichnet, dass** die besagte Selbstinduktionsspulenantenne (5) oder die besagte Dipol-Antenne (12) auf einem Träger, vorzugsweise einer Plastikfolie, ausgeführt sind, und wobei der besagte Träger auf die vordere (6) oder hintere (7) Seite des besagten Substrats geklebt ist.

4. Ein Verfahren zur Herstellung eines Etiketts nach Anspruch 2 oder 3, umfassend die Schritte:
(a) Herstellen der Selbstinduktionsspulenantenne oder Aufbringen der Dipol-Antenne auf den Träger;
(b) Positionieren der integrierten Schaltung, die mit der besagten Selbstinduktionsspulenantenne oder der besagten Dipol-Antenne verbunden ist, um eine erste Baugruppe bereitzustellen;
(c) Herstellen eines Zwischenprodukts, umfassend eine RF EAS Antenne und eine UHF Antenne auf dem Substrat (4), basierend auf einer subtraktiven Aluminium-Metall-Technologie;
(d) Herstellen einer zweiten Baugruppe durch Positionieren und Anbringen der ersten Baugruppe, hergestellt in Schritt (b), auf der vorderen oder der hinteren Seite des besagten Zwischenprodukts bezüglich der UHF Antenne, hergestellt in Schritt (c),
und wobei die Schritte (a) und (b) nacheinander ausgeführt werden, und wobei Schritt (c) vor, gleichzeitig mit oder nach den Schritten (a) und (b) ausgeführt werden kann.

5. Das Verfahren nach Anspruch 5, wobei in Schritt (d), das Anbringen der ersten Baugruppe auf der vorderen oder der hinteren Seite des besagten Zwischenprodukts mittels Kleben ausgeführt wird.

6. Das Verfahren nach Anspruch 5 oder 6, wobei in Schritt (c), die EAS Antenne und/oder die UHF Antenne mittels einer subtraktiven mechanischen Metall-Technik gefertigt werden.

7. Ein Verfahren zur Verwendung des Etiketts, genannt "RFID/Antidiebstahl"-Etikett, nach Anspruch 2 oder 3, oder des Etiketts erhalten mittels des Verfahrens nach Anspruch 4 oder 5, wobei das Verfahren zur Verwendung die folgenden Schritte umfasst:
(a) Anbringen des RFID/Antidiebstahl-Etiketts an das Produkt, welches geschützt und/oder verfolgt werden soll, nach Fertigstellung des besagten Produkts;
(b) Initialisieren der integrierten Schaltung mit Daten D und Aktivieren der EAS RF Antenne;
(c) Lesen der Daten D mindestens einmal zwischen dem Verlassen der Produktionsstätte des besagten Produkts und dem Deaktivieren der EAS Antenne beim Verlassen des Produkts an einer Verkaufsstelle;
(d) Deaktivieren der EAS Antidiebstahl-Antenne beim Verlassen des Produkts an der besagten Verkaufsstelle; im Wissen, dass die Schritte (a) und (b) in beliebiger Reihenfolge ausgeführt werden können, während die Schritte (c) und (d) in der angegebenen Reihenfolge ausgeführt werden, und nach den Schritten (a) und (b).

8. Das Verfahren nach Anspruch 7, **dadurch gekennzeichnet, dass** die Daten D sich auf das Produkt, welches geschützt und/oder verfolgt werden soll, beziehen.
